# EUROPEAN PATENT APPLICATION

(11) **EP 1 710 854 A2**
(43) Date of publication of application: **11.10.2006**
(21) Application number: 06005376.6
(22) Date of filing: 16.03.2006
(51) Int. Cl.: H01M 2/36, H01M 10/06

(54) **Connector for battery water replenishment system**

(30) Priority: 16.03.2005 US 662498 P
(71) Applicant: Jones, William E. M., Freeport (BS)
(72) Inventor: Jones, William E. M., Freeport (BS); Alden, Trevor, Huntingdon Valley, PA 19006 (US)
(74) Representative: Callies, Rainer Michael

(57) **Abstract**

A quick connect coupling (24) for a battery watering system is disclosed. The coupling has a housing (38) with inlets and outlets, each having a collar (40) with a tapered bore (42). A collet having flexible fingers (50) attached to a ring (54) is axially movable within the collar (40). The fingers (50) have inwardly pointing teeth (58) positioned distally to the ring (54). The collet receives a conduit (20) coaxially. The teeth (58) engage the outer surface of a conduit (20) when it is inserted into the housing (38) through the collet. The teeth (58) grip the conduit (20) and are forced into engagement with it by engagement of the fingers (50) with the tapered bore (42) of the collar (40) when force is applied to withdraw the conduit (20) from the housing (38). The teeth (58) are preferably made of plastic.

## Description

### Cross Reference to Related Application

This application claims priority to U.S. Provisional Application No. 60/662,498, filed March 16, 2005, which is hereby incorporated herein by reference.

### Field of the Invention

The invention relates to quick connect couplings adapted for use with electric battery water replenishment systems.

### Background of the Invention

Electrical batteries that have aqueous electrolytes and see heavy duty industrial use, such as large industrial lead-acid batteries powering fork-lift trucks, consume water during recharging. Water in the electrolyte breaks down into oxygen and hydrogen gases as a result of electrolysis during charging. The gases bubble up through the electrolyte and escape from the battery housing through a vent opening. The electrolysis causes a loss of water from the electrolyte solution, and as a result, such batteries require periodic replenishment of the lost water.

For large batteries with many cells, single point watering systems were developed to avoid the error-prone, labor-intensive and tedious process of visually inspecting and manually watering each cell individually. Single point watering systems may comprise, for example, float valves positioned in each cell, the cells being linked together by a system of water supply conduits which feeds water to the cells through the float valves. When water replenishment is required, the water supply conduit system is connected to a water reservoir, water flows from the reservoir to the cells and the float valves close to cut off the flow of water once their respective cells are filled.

For batteries having many cells, it is tedious and expensive to construct a water supply conduit system. The large number of battery cells result in large numbers of valves, each of which may be connected to two sections of conduit. Thus, each cell may require two connectors, and additional connectors will also be necessary to complete the system. The most common tubing connection method uses flexible tubing and fittings having barbed ends. The fittings may be part of a valve, or may stand alone as required to effect the necessary connections. In constructing such a system, the end of a flexible tube is pushed directly on to a barbed fitting. Sometimes, a clamping ring is added to hold the tube in place against high water pressure. While this method is inexpensive and operates satisfactorily in most applications, it is both laborious and time-consuming to install on the battery. For example, typically an installer will use a heating system such as an oven, hot air gun or hot water to soften the tubing before pushing it on to the barbed fitting. The tubing shrinks as it cools to make a tight connection. However, if a moderately high pressure is to be used, say 30 psi or more, the installer will use the additional ring clamps to prevent the tubing from blowing off the barbed fitting. Since there may be well over 80 connections of this type to make on a single 40 cell battery, it is clear that a better and quicker attachment means would be preferred by users.

There is a type of quick connect coupling that has found use in household plumbing systems as well as hydraulic oil systems for industry. Such quick connect couplings allow a conduit to be inserted into the coupling where it is held fast in a fluid tight connection using a seal such as an O-ring and a retainer positioned within the coupling. The retainer has a set of metal teeth that are forced into engagement with the conduit. The teeth cut into the tubing, which is usually plastic, and hold it firmly in sealing relation with the coupling. Internal pressure or external forces that would tend to withdraw the conduit from the coupling are resisted by the teeth, which are integrated in any one of a number of self-jamming arrangements that cause them to engage the conduit with a force proportional to the applied force tending to withdraw the conduit from the coupling.

Quick connect couplings as described above have thus far never been used in battery water replenishment systems. Such couplings are generally used in applications with high fluid pressures, for example 100 psi, and are generally recommended by their manufacturers to be used in conjunction with rigid or semi-rigid tubing only, such as polyethylene, polypropylene, polybutylene, rigid PVC or even metal pipe because the softer tubing, such as flexible PVC or rubber, tends to pull out easily and thereby fails to form a fluid tight connection. In fact, these push in couplings are generally considered to be incompatible with soft flexible tubing. In cases where soft tubing must be used, it is generally recommended that ferrules made from rigid materials be placed inside the ends of soft tubing to reinforce those ends, before pushing the tubing into the coupling. This gives the tubing enhanced rigidity, making the soft tubing into rigid tubing at its ends.

Additional disadvantages are inherent in these prior art retainers which find their source in the use of metal teeth. It is preferred to avoid any use of metal in battery watering systems due to the corrosive effects of the electrolyte, typically sulfuric acid, which attacks most metals including some stainless steels. It is especially undesirable to have metal form internal components that are critical to the proper functioning of a device such as the retaining teeth of a coupling. However, common wisdom dictates that metal must be used for retainers so that they hold an edge and have sufficient strength to cut into and hold the conduit as required.

Another disadvantage of using metal in internal components such as retainers is the cost. Metal retainers or retainers made of a combination of plastic and metal cost as much as 10-15 times greater than an all plastic retainer.

Combination metal and plastic retainers further suffer from a higher part count than retainers made of a single material that can be made in a unitary fashion, for example, molded from plastic resin.

It is clear that there is a need for a quick connect coupling that is useable with soft tubing in an acid environment and that does not suffer the disadvantages corrosion, excessive cost and high part count of prior art couplings.

### Summary of the Invention

The invention concerns a quick connect coupling for use with plastic conduit in an acid environment, for example, in a battery water replenishment system. The coupling comprises a housing having an inlet for receiving the conduit and an outlet. A collar is positioned within the inlet. The collar has a tapered bore with a smaller diameter facing the inlet. A retainer member is disposed within the collar so as to be movable axially relative to the collar. The retainer member has a plurality of flexible fingers connected to one another at a proximal end. The fingers extend longitudinally therefrom to a distal end and are positioned relative to one another so as to receive the conduit between the fingers. Each of the fingers has a tooth positioned distally from the proximal end. Each tooth projects inwardly so as to engage the conduit inserted within the inlet. Each tooth grips the conduit and is urged thereagainst by the tapered bore of the collar upon axial motion of the conduit and the retainer member in a direction outward from the housing.

Preferably each tooth is formed of plastic and extends transversely to the conduit. The retainer member may comprise a collet having a ring member from which the fingers extend. The conduit is received through the ring member. Preferably the collet is formed as a unitary member from a plastic resin.

In operation, the teeth of the retainer member are urged against the conduit by contact between the fingers and the tapered bore. The collar may be formed as either an integral or a separate member from the housing.

The invention also includes valves adapted for use with battery watering systems, as well as batteries having watering systems that use a quick connect coupling as described above.

### Brief Description of the Drawings

Figure 1 is a plan view of a battery having a single point watering system using couplings and valves according to the invention;
Figure 2 is a partial cross section showing a battery cell using couplings and valves according to the invention;
Figures 3-5 are sectional views taken at line 4-4 of Figure 1 showing the operation of a coupling according to the invention;
Figure 6 is a cross-sectional view taken at line 6-6 of Figure 4;
Figure 7 is a cross-sectional view taken at line 7-7 of Figure 4; and

Figure 8 is a sectional view showing a conduit having a ferrule as used with the coupling according to the invention.

### Detailed Description of the Embodiments

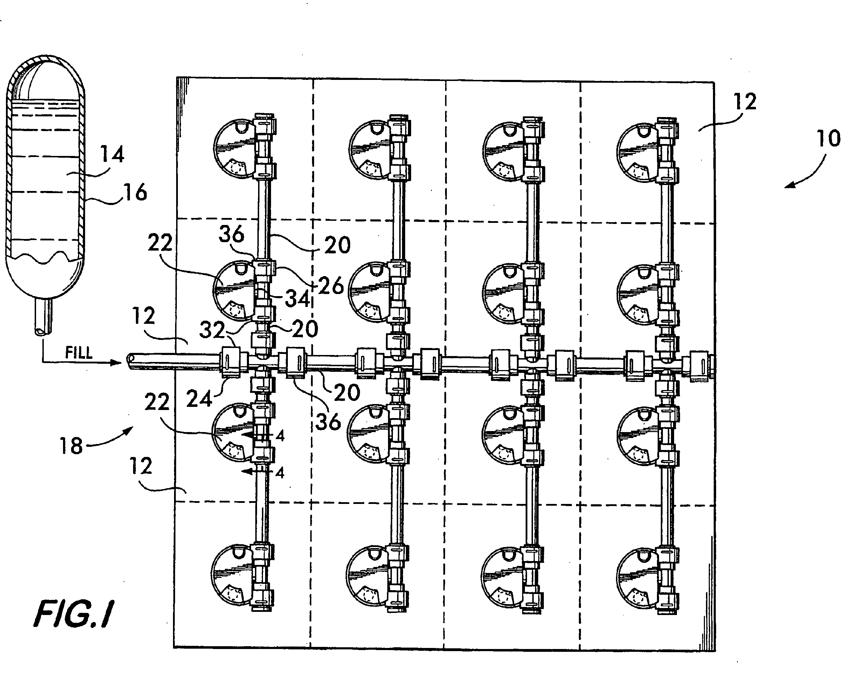

Figure 1 shows a battery 10, for example, a lead-acid battery, having a plurality of cells 12 containing a liquid electrolyte, for example, aqueous sulfuric acid. Cells 12 are replenished with water 14 from a reservoir 16 through a single point watering system 18. Watering system 18 is formed from conduit 20 that is connected to valves 22 through quick connect couplings 24 that stand alone, as well as quick connect couplings 26 that may be an integral part of each valve 22.
Stand-alone couplings may include straight through couplings, "tee" couplings similar to couplings 26, cruciform couplings 24 as shown, as well as elbows.

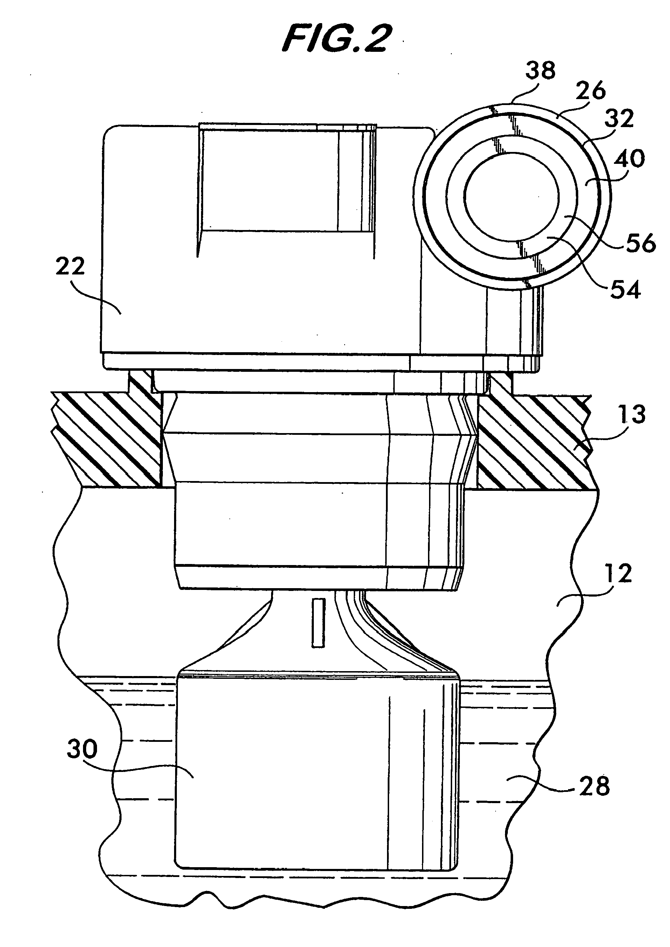

Figure 2 shows a detailed view of a cell 12 containing liquid electrolyte 28 within a housing 13 (a section of the housing being shown). The cell also includes positive and negative electrodes or plates as is well known in the art, e.g., see published U.S. Published Patent Application No. 2006/0035138A1 which is hereby incorporated by reference herein. Valve 22 is preferably a float valve that controls the flow of water to the cell and maintains it at a desired level, the float 30 actuating a valve closing member within the valve when buoyed upwardly by the electrolyte to a position indicative of a full cell. A representative float valve is shown in published U.S. Patent Published Application No. 2005/0221166A1, which is hereby incorporated by reference herein.

Valve 12 has a quick connect coupling 26 which has an inlet 32 that receives conduit 20, a first outlet 34 (see Figure 1) that provides fluid communication to the cell 12 through the valve 22, and a second outlet 36 that receives conduit for connection to other valves or couplings on the battery 10 which can receive a plug or end cap for sealing the outlet when the valve is at the end of a water conduit run. Similarly, the stand alone couplings 24 have an inlet 32 and an outlet 36, both of which receive conduit 20 for connections to other couplings and valves as shown in Figure 1. The operation of the quick connect couplings is substantially the same whether the coupling is used on the valve or as a stand alone component, and the description below applies to both coupling embodiments 24 and 26. By way of example, the structure and operation of coupling 24 will be described in detail, it being understood that the description applies equally to coupling 26.

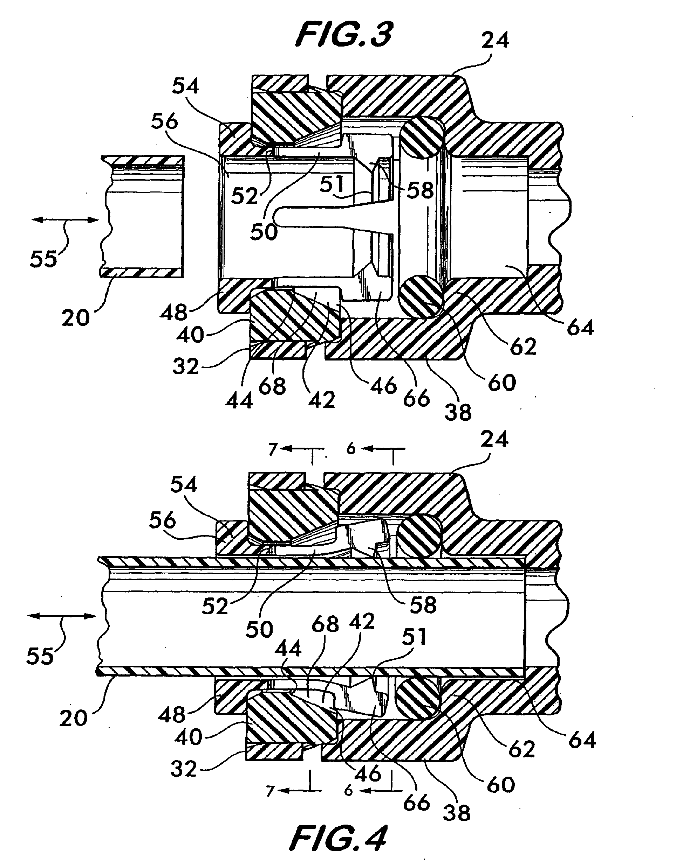

Figure 3 shows a view of a portion of the coupling 24, which could represent either the inlet 32 or outlet 36, both parts being substantially the same. By way of example the inlet 32 is described below, it being understood that the description also applies to the outlet.

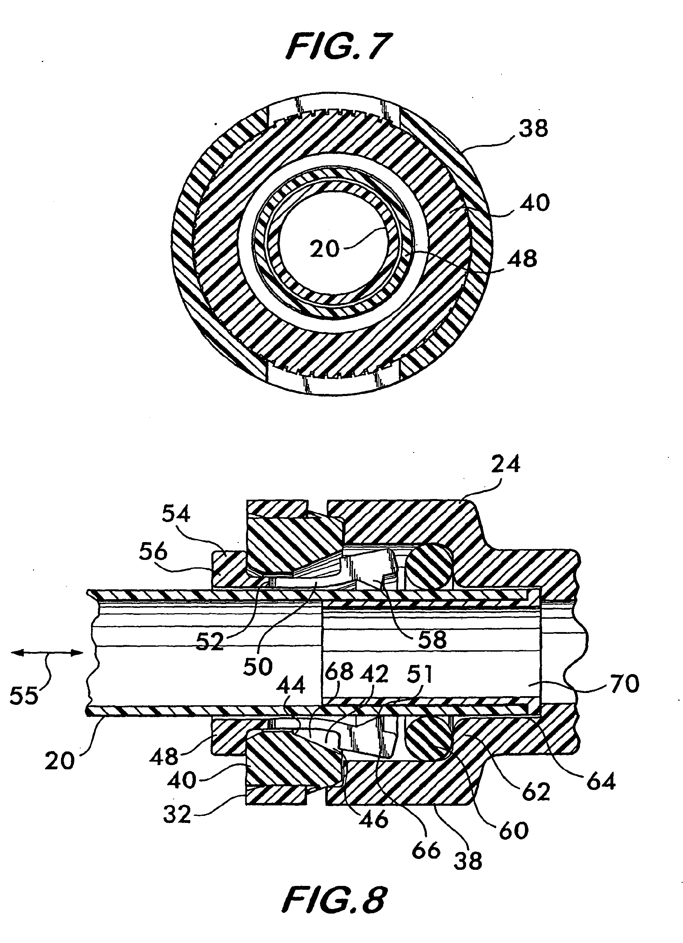

Coupling 24 comprises a housing 38 that defines the inlet 32. A collar 40 is positioned within the inlet 32. The collar may be a separate member as shown in Figures 3 and 7, or it may be integrally molded as part of the housing. Collar 40 has a tapered bore 42 defined by a smaller diameter 44 and a larger diameter 46. The smaller diameter 44 of bore 42 faces the inlet of housing 38, the larger diameter 46 facing away therefrom. Put another way, the diameter of the bore 42 increases in a direction moving away from the inlet.

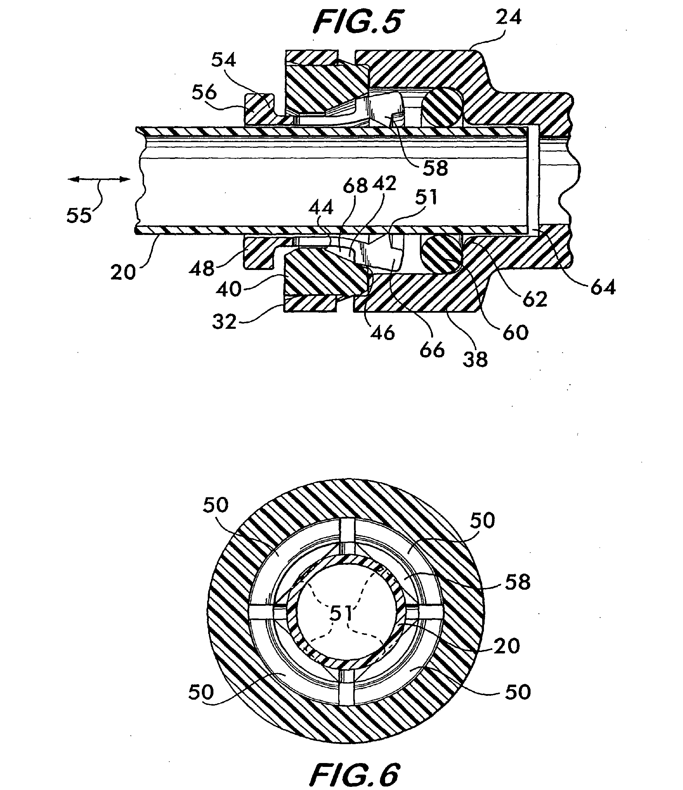

A retainer member 48 is disposed within the collar 40. The retainer member comprises a plurality of flexible fingers 50 connected to one another at a proximal end 52. Preferably the fingers 50 are connected to one another by being attached to a ring 54, the ring 54 and fingers 50 forming a collet 56 that is axially moveable relatively to the collar 40. An axis 55 extending longitudinally and defining the axial direction of motion of the collet is shown for orientation purposes. As shown in Figure 6, fingers 50 are positioned relatively to one another so as to receive conduit 20 between them. Each finger has a tooth 58 positioned distally from the proximal end 52. Each tooth 58 projects inwardly so as to engage the conduit 20 when it is inserted within the inlet 32. Each tooth has an edge 51 for contacting the conduit 20, the edge preferably being flat as shown in the illustrated embodiment. Other configurations for the tooth, for example, circumferentially curved, are also feasible. Preferably edge 51 is as sharp as possible to provide a positive bite against the conduit 20. A seal 60, preferably an O-ring, is also positioned within the housing 38. The O-ring is captured between the collet 56 and a shoulder 62 and provides sealing engagement with the conduit 20 when it is inserted into the housing 38 and through the O-ring as shown. Preferably, housing 38 also has a socket 64 positioned adjacent to the shoulder 62 that receives the conduit 20 and acts as a stop for the end of the conduit.

Preferably, the conduit 20 is formed from a soft, acid resistant plastic tubing, such as polyethylene. The housing, collar and collet, including the fingers 50 and the teeth 58 are also formed from acid resistant plastic, particularly plastics that are resistant to sulfuric acid. Such plastics include polyethylene, polypropylene, polycarbonate or ABS plastic by way of example. By making the retainer member entirely from acid resistant plastic and avoiding the use of metal, several advantages are realized. First, the problem of corrosion that is associated with metal teeth is avoided. The acid environment of the battery causes accelerated corrosion of metal parts and will thus cause couplings having metal components to fail rapidly, requiring frequent replacement. Second, the cost of the all plastic collet is significantly less than one which includes metal teeth integrally molded within the fingers. Finally, the all plastic collet has a lower part count, thereby achieving simplicity of design. It is thought throughout the industry that metal teeth are necessary to ensure a reliable connection between the coupling and the conduit, and that plastic teeth will not be adequate. However, tests have shown that for self watering battery systems as described herein, a plastic collet having plastic teeth performs adequately and provides a reliable, fluid-tight joint.

The operation of the quick connect coupling according to the invention is described with reference to Figures 3-5. As shown in Figure 3, conduit 20 is aligned with the ring 54 of collet 56. As shown in Figure 4, the conduit is inserted into the collet, past the teeth 58, through the O-ring seal 60 so that it seats within the housing socket 64. Engagement between the seal and the conduit outer surface provides a fluid-tight connection. Teeth 58 also engage the outer surface of conduit 20. The fingers 50 are deflected outwardly by engagement of the teeth 58 with the conduit. If the conduit is moved so as to withdraw it out from the housing 38, both the collet 56 and the conduit 20 begin to move axially to the left within the housing as shown in Figure 5. However, the distal ends 66 of fingers 50 engage the tapered bore 42 of the collar 40, and the angularly oriented surface 68 of the tapered bore forces the teeth 58 into tighter engagement with the conduit, the engagement force between the teeth and the conduit increasing with increasing force applied to withdraw the conduit from the housing. The teeth 58 grip the conduit 20 and prevent its removal. The conduit may be removed, however, by pushing the collet 56 into housing 38 which prevents the collet from moving axially and disengages the fingers 50 from engagement with the tapered bore 42. With the collet held in this position, the conduit 20 may be withdrawn from the housing.

The embodiments thus described are preferred for conduit having a diameter up to about 12mm. For larger diameter conduit it may be desirable to reinforce the conduit with a ferrule 70 as shown in Figure 8. Ferrule 70 may be made of a relatively hard plastic and inserted within the end of the conduit to reinforce it and prevent collapse when the teeth are forced radially inwardly to prevent withdrawal of the conduit from the housing by engagement of the fingers with the tapered bore of the collar.

Couplings according to the invention may be used as stand alone devices or with valves to provide a single point watering system for lead-acid batteries that does not suffer from the problems of corrosion, excessive cost and high part count, and provide a system that is easy to install rapidly to provide reliable, fluid tight joints.

## Claims

1. A battery having a watering system for replenishing the water within the battery, said battery comprising:
at least one battery cell containing an electrolyte, said electrolyte comprising sulfuric acid;
a valve in fluid communication with said cell for controlling flow of water to said cell for said water replenishment;
a flexible conduit formed of plastic for delivering water to said valve;
a coupling connecting said conduit to said valve, said coupling comprising:
a housing having an inlet receiving said conduit and an outlet in fluid communication with said valve;
a collar positioned within said inlet, said collar having a tapered bore with a smaller diameter facing said inlet; and
a retainer member disposed within said collar so as to be movable axially relative to said collar, said retainer member having a plurality of flexible fingers connected to one another at a proximal end and extending longitudinally therefrom to a distal end, said fingers being positioned relative to one another to receive said conduit between said fingers, each of said fingers having a tooth positioned distally from said proximal end and projecting inwardly so as to engage said conduit inserted within said inlet, each said tooth gripping said conduit and being urged thereagainst by said tapered bore of said collar upon axial motion of said conduit and said retainer member in a direction out of said housing.

2. A battery according to Claim 1, wherein each said tooth is formed of plastic.

3. A battery according to Claim 2, wherein said plastic is an acid resistant plastic.

4. A battery according to Claim 1, wherein said retainer member comprises a collet having a ring member from which said fingers extend, said conduit being received through said ring member.

5. A battery according to Claim 4, wherein said collet is formed as a unitary member from an acid resistant plastic.

6. A battery according to Claim 5, wherein said plastic is selected from the group consisting essentially of polyethylene, polypropylene, polycarbonate and ABS plastic.

7. A battery according to Claim 2, wherein said tooth extends transversely to said conduit and has a flat edge for contacting said conduit.

8. A battery according to Claim 2, wherein said conduit is formed from polyethylene.

9. A battery according to Claim 4, wherein said teeth are urged against said conduit by contact between said fingers and said tapered bore.

10. A battery according to Claim 4, wherein said collar is formed as a separate member from said housing.

11. A battery according to Claim 1, wherein said coupling is mounted on said valve.

12. A battery according to Claim 1, wherein said coupling further comprises:
a second outlet positioned in said housing in fluid communication with a second flexible conduit formed of plastic, said second outlet being in fluid communication with said first outlet;
a second collar positioned within said second outlet, said second collar having a tapered bore with a smaller diameter facing said second outlet; and
a second retainer member disposed within said second collar so as to be movable axially relative to said second collar, said second retainer member having a plurality of flexible fingers connected to one another at a proximal end and extending longitudinally therefrom to a distal end, said fingers being positioned relative to one another to receive said second conduit between said fingers, each of said fingers having a tooth positioned distally from said proximal end and projecting inwardly so as to engage said second conduit inserted within said second outlet, each said tooth gripping said second conduit and being urged thereagainst by said tapered bore of said second collar upon axial motion of said second conduit and said second retainer member in a direction out of said housing.

13. A valve for controlling flow of water to a cell in a lead-acid battery, said valve being in fluid communication with said cell, said valve having a quick connect coupling adapted to connect to a plastic conduit for delivering water to said cell, said coupling comprising:
a housing having an inlet adapted to receive said conduit and an outlet in fluid communication with said valve;
a collar positioned within said inlet, said collar having a tapered bore with a smaller diameter facing said inlet; and
a retainer member disposed within said collar so as to be movable axially relative to said collar, said retainer member having a plurality of flexible fingers connected to one another at a proximal end and extending longitudinally therefrom to a distal end, said fingers being positioned relative to one another to receive said conduit between said fingers, each of said fingers having a tooth positioned distally from said proximal end and projecting inwardly so as to engage said conduit inserted within said inlet, each said tooth gripping said conduit and being urged thereagainst by said tapered bore of said collar upon axial motion of said conduit and said retainer member in a direction out of said housing.

14. A valve according to Claim 13, wherein each said tooth is formed of plastic.

15. A valve according to Claim 14, wherein said plastic is an acid resistant plastic.

16. A valve according to Claim 13, wherein said retainer member comprises a collet having a ring member from which said fingers extend, said conduit being received through said ring member.

17. A valve according to Claim 16, wherein said collet is formed as a unitary member from an acid resistant plastic.

18. A valve according to Claim 17, wherein said plastic is selected from the group consisting essentially of polyethylene, polypropylene, polycarbonate and ABS plastic.

19. A valve according to Claim 13, wherein said tooth extends transversely to said conduit.

20. A valve according to Claim 13, wherein said conduit is formed from polyethylene.

21. A valve according to Claim 16, wherein said teeth are urged against said conduit by contact between said fingers and said tapered bore.

22. A valve according to Claim 16, wherein said collar is formed as a separate member from said housing.

23. A valve according to Claim 13, wherein said valve is connectable to a second flexible conduit formed of soft plastic, said valve further comprising:
a second outlet positioned in said housing for connection with said second flexible conduit, said second outlet being in fluid communication with said first outlet;
a second collar positioned within said second outlet, said second collar having a tapered bore with a smaller diameter facing said second outlet; and
a second retainer member disposed within said second collar so as to be movable axially relative to said second collar, said second retainer member having a plurality of flexible fingers connected to one another at a proximal end and extending longitudinally therefrom to a distal end, said fingers being positioned relative to one another to receive said second conduit between said fingers, each of said fingers having a tooth positioned distally from said proximal end and projecting inwardly so as to engage said second conduit inserted within said second outlet, each said tooth gripping said second conduit and being urged thereagainst by said tapered bore of said second collar upon axial motion of said second conduit and said second retainer member in a direction out of said housing.

24. A quick connect coupling for use with plastic conduit in an acid environment, said coupling comprising:
a housing having an inlet for receiving said conduit and an outlet;
a collar positioned within said inlet, said collar having a tapered bore with a smaller diameter facing said inlet; and
a retainer member disposed within said collar so as to be movable axially relative to said collar, said retainer member having a plurality of flexible fingers connected to one another at a proximal end and extending longitudinally therefrom to a distal end, said fingers being positioned relative to one another to receive said conduit between said fingers, each of said fingers having a tooth positioned distally from said proximal end and projecting inwardly so as to engage said conduit inserted within said inlet, each said tooth gripping said conduit and being urged thereagainst by said tapered bore of said collar upon axial motion of said conduit and said retainer member in a direction out of said housing.

25. A coupling according to Claim 24, wherein each said tooth is formed of plastic.

26. A coupling according to Claim 25, wherein said plastic is an acid resistant plastic.

27. A coupling according to Claim 24, wherein said retainer member comprises a collet having a ring member from which said fingers extend, said conduit being received through said ring member.

28. A coupling according to Claim 27, wherein said collet is formed as a unitary member from an acid resistant plastic.

29. A coupling according to Claim 28, wherein said plastic is selected from the group consisting essentially of polyethylene, polypropylene, polycarbonate and ABS plastic.

30. A coupling according to Claim 24, wherein said tooth extends transversely to said conduit.

31. A coupling according to Claim 24, wherein said conduit is formed from polyethylene.

32. A coupling according to Claim 27, wherein said teeth are urged against said conduit by contact between said fingers and said tapered bore.

33. A coupling according to Claim 27, wherein said collar is formed as a separate member from said housing.
